# EUROPEAN PATENT SPECIFICATION

(11) **EP 0 689 571 B1**
(45) Date of publication and mention of the grant of the patent: **17.11.1999**
(21) Application number: 94911388.0
(22) Date of filing: 14.02.1994
(51) Int. Cl.: C09J 183/10, C09J 7/02

(54) **THREE-LAYER POLYIMIDESILOXANE ADHESIVE TAPE**
DREISCHICHT-POLYIMIDSILOXAN KLEBEBAND
BANDE ADHESIVE DE POLYIMIDESILOXANE A TROIS COUCHES

(30) Priority: 16.03.1993 US 32033
(43) Date of publication of application: 03.01.1996
(73) Proprietor: Occidental Chemical Corporation, Niagara Falls, N.Y. 14302 (US)
(72) Inventor: ROSENFELD, Jerold, C., Amherst, NY 14228 (US); ROJSTACZER, Sergio, R., Amherst, NY 14228 (US); TYRELL, John, A., Williamsville, NY 14221 (US)
(74) Representative: VOSSIUS & PARTNER
(86) International application number: US9401682
(87) International publication number: WO9421744

(56) References cited:
- EP-A- 0 284 803
- EP-A- 0 518 060
- EP-A- 0 598 911
- US-A- 3 740 305
- US-A- 4 829 131
- US-A- 5 091 251
- DATABASE WPI Derwent Publications Ltd., London, GB; AN 93-191755 & JP,A,5 117 622 (SUMITOMO) 14 May 1993

## Description

### Background of the Invention

This invention relates to an adhesive tape having a polyimidesiloxane layer on either side of a carrier film. In particular, it relates to a three-layer tape wherein a polyimide carrier film is sandwiched between two polyimidesiloxane adhesive layers.

In the electronics industry adhesive tapes are used for a variety of purposes such as, for example, bonding a metal lead frame to an integrated circuit chip. Such tapes, useful for LOC (lead on chip) attachments, are required to be of high purity, have excellent adhesive properties, and be easy to apply using mass production techniques. Where wire bonding is done after the LOC attachment, it is desirable for the polyimidesiloxane adhesive to have a high Tg, usually above about 150°C. Examples of adhesive polyimides can be found in U.S. Patents 3,740,305 and 4,543,295. Also see U.S. Patent 4,480,009.

US-A-5,091,251 discloses an adhesive tape which consists essentially of a heat-resistant substrate consisting of a heat-resistant adhesive layer and a heat-resistant film, a copper foil provided on the heat-resistant adhesive layer of the substrate, and a B-stage cured heat-resistant resin adhesive layer and a removable protective film provided successively on the other side of the heat-resistant film.

EP-A-0 598 911 relates to a film adhesive comprising, as the main constituent, a polyimide resin having a glass transition temperature of 350°C or lower and soluble in organic solvents, which polyimide resin is obtained by reacting at least one of the following acid components (A) and (B)
(A) 4,4'-oxydiphthalic acid dianhydride
(B) 3,3',4,4'-biphenyltetracarboxylic acid dianhydride and/or 3,3',4,4'-benzophenonetetracarboxylic acid dianhydride
with at least one of the following amine components (C) and (D)
(C) a siloxane compound represented by the following general formula (1) and/or 2,2-bis(4-(4-aminophenoxy)phenyl)propane 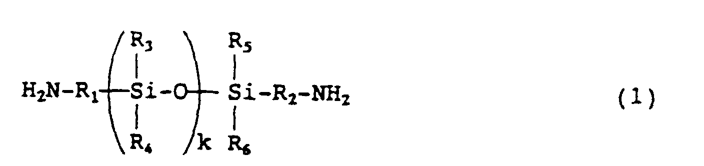 wherein R₁ and R₂ are each a bivalent aliphatic (C₁₋₄) or aromatic group; R₃, R₄, R₅ and R₆ are each a mono-valent aliphatic or aromatic group; and k is an integer of 1-20,
(D) bis(aminophenoxy)benzene and/or dimethylphenylene-diamine
to give rise to ring closure of imide. This document is a document in the sense of Art. 54(3) EPC and only relevant for the designated states DE, FR and GB. Therefore, the present invention comprises two claims sets.

Some LOC tapes make use of polyimides that are applied as a polyamic acid layer to a polyimide carrier layer and are then imidized. The imidization of a polyamic acid results in the evolution of water and solvent which can cause blistering and a lack of uniform adhesion. A good adhesive tape for use in the electronics and other industries could be applied with heat and pressure and without the evolution of any volatiles.

### Summary of the Invention

We have discovered a superior adhesive tape which will bond together many different materials using only heat and pressure and without the evolution of volatiles. The adhesive tape of this invention consists of a carrier layer sandwiched between two fully imidized thermoplastic polyimidesiloxane adhesive layers as specified in the claims. Because the polyimidesiloxane adhesive layers are fully imidized and are solventless, they do not evolve water, solvent, or other volatiles when heat and pressure are used to bond surfaces to the tape.

In order to manufacture this unusual tape, it is necessary to form a solution of a fully imidized polyimidesiloxane adhesive in a solvent. The solution is then applied to the carrier layer and the solvent is evaporated to form a fully imidized polyimidesiloxane. Surprisingly, a fully imidized polyimidesiloxane adhesive layer formed in this manner from solution without heat and pressure will adhere to the carrier layer as a non-tacky film, yet will flow and form a bond to other surfaces when heat and pressure are applied.

We have also found that tapes prepared according to the process of this invention have advantages over identical tapes made by imidizing a polyamic acid layer on a carrier layer. A major advantage of the tapes of this invention is that they can be made rapidly since it is only necessary to evaporate the solvent from the adhesive layer and it is not necessary to imidize the adhesive layer.

### Description of the Invention

The polyimidesiloxanes used in the process and product of this invention must not only be fully imidized but must also be thermoplastic and soluble in a solvent. Polyimidesiloxanes are formed by reacting a dianhydride with a diamine, where either a portion of the dianhydride or a portion of the diamine contains siloxane groups. That is, one uses either a dianhydride, a non-siloxane containing diamine, and a siloxane containing diamine, or one uses a dianhydride, a non-siloxane containing diamine, and a siloxane containing dianhydride. It is preferable to use siloxane containing diamines as they are more available and have good properties.

The siloxane-containing compounds may be either aromatic or non-aromatic, but non-aromatic compounds are preferred as they are more readily available. Examples of siloxane diamines that can be used include compounds having the formula 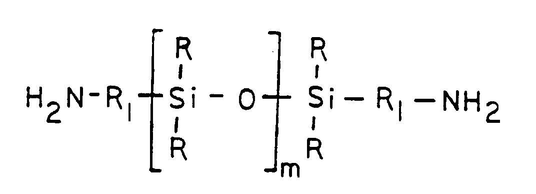 Examples of siloxane dianhydrides that can be used include compounds having the formula 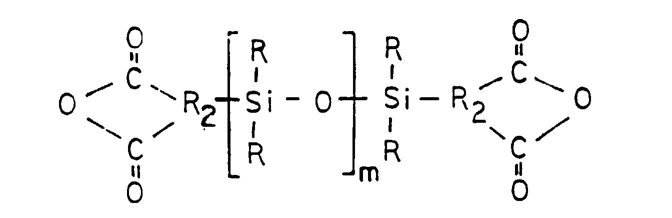 where R, R₁, and R₂ are mono, di, and triradicals, respectively, each independently selected from a substituted or unsubstituted 1 to 12 carbon atom aliphatic group or a substituted or unsubstituted 6 to 10 carbon atom aromatic group. Examples of monoradicals include -CH₃, -CF₃, -CH=CH₂, -(CH₂)ₙCF₃, -C₆H₅, -CF₃-CHF-CF₃, and 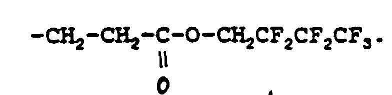 Examples of diradicals include -(CH₂)ₙ-, CF₂- and -C₆H₄-. Examples of triradicals include 〉CH-CH₂-, 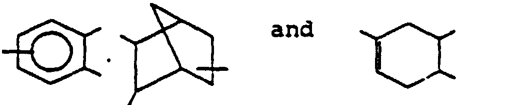 where n = 1 to 10 and m is 1 to 200, but is preferably 1 to 12. (Siloxane diamines are herein denoted by the notation "Gₘ".)

Any dianhydride may be used in forming the polyimidesiloxane, although aromatic dianhydrides are preferred as they give superior properties. Examples of suitable dianhydrides include
1,2,5,6-naphthalene tetracarboxylic dianhydride;
1,4,5,8-naphthalene tetracarboxylic dianhydride;
2,3,6,7-naphthalene tetracarboxylic dianhydride;
2-(3',4'-dicarboxyphenyl) 5,6-dicarboxybenzimidazole dianhydride;
2-(3',4'-dicarboxyphenyl) 5,6-dicarboxybenzoxazole dianhydride;
2-(3',4'-dicarboxyphenyl) 5,6-dicarboxybenzothiazole dianhydride;
2,2',3,3'-benzophenone tetracarboxylic dianhydride;
2,3,3',4'-benzophenone tetracarboxylic dianhydride;
3,3',4,4'-benzophenone tetracarboxylic dianhydride (BDTA);
2,2',3,3'-biphenyl tetracarboxylic dianhydride;
2,3,3',4'-biphenyl tetracarboxylic dianhydride;
3,3',4,4'-biphenyl tetracarboxylic dianhydride (BPDA) ;
bicyclo-[2,2,2]-octen-(7)-2,3,5,6-tetracarboxylic-2,3,5,6-dianhydride;
thio-diphthalic anhydride;
bis (3,4-dicarboxyphenyl) sulfone dianhydride;
bis (3,4-dicarboxyphenyl) sulfoxide dianhydride;
bis (3,4-dicarboxyphenyl oxadiazole-1,3,4) paraphenylene dianhydride;
bis (3,4-dicarboxyphenyl) 2,5-oxadiazole 1,3,4-dianhydride;
bis 2,5-(3',4'-dicarboxydiphenylether) 1,3,4-oxadiazole dianhydride;
bis (3,4-dicarboxyphenyl) ether dianhydride or oxydiphthalic anhydride (ODPA);
bis (3,4-dicarboxyphenyl) thioether dianhydride;
bisphenol A dianhydride;
bisphenol S dianhydride;
2,2-bis (3,4-dicarboxyphenyl) hexafluoropropane dianhydride or 5,5-[2,2,2-trifluoro-1-(trifluoromethyl)ethylidene] bis-1,3-isobenzofurandione) (6FDA);
hydroquinone bisether dianhydride;
bis (3,4-dicarboxyphenyl) methane dianhydride;
cyclopentadienyl tetracarboxylic acid dianhydride;
cyclopentane tetracarboxylic dianhydride;
ethylene tetracarboxylic acid dianhydride;
perylene 3,4,9,10-tetracarboxylic dianhydride;
pyromellitic dianhydride (PMDA);
tetrahydrofuran tetracarboxylic dianhydride; and
resorcinol dianhydride.

The anhydrides can be used in their tetraacid form or as mono, di, tri, or quatra esters of the tetra acid, but the dianhydride form is preferred because it is more reactive.

The preferred dianhydrides are ODPA, BPDA, BTDA, 6FDA, and PMDA or mixtures thereof, as these dianhydrides are readily available and have been found to give superior properties. The most preferred dianhydride is ODPA because it gives a polyimidesiloxane having better adhesion and good flexibility.

The non-siloxane containing diamine should be aromatic as those diamines give the best properties. Examples of suitable aromatic diamines include
m- and p-phenylenediamine;
2,4-(TDA), 2,5- and 2,6-diaminotoluene;
p- and m-xylylenediamine;
4,4'-diaminobiphenyl;
4,4'-diaminodiphenyl ether or 4,4'-oxydianiline 3,4'-oxydianiline (ODA) ;
4,4'-diaminobenzophenone;
3,3', 3,4', or 4,4-diaminophenyl sulfone or m,m-, m,p- or p,p- sulfone dianiline;
4,4'-diaminodiphenyl sulfide;
3,3' or 4,4'-diaminodiphenylmethane or m,m- or p,p-methylene dianiline;
3,3'-dimethylbenzidine;
4,4'-isopropylidenedianiline;
1,4-bis (p-aminophenoxy)benzene;
1,3-bis(p-aminophenoxy)benzene;
4,4'-bis(4-aminophenoxy)biphenyl;
1,3-bis(3-aminophenoxy)benzene (APB);
2,4-diamine-5-chlorotoluene;
2,4-diamine-6-chlorotoluene;
2,2-bis-4[4-aminophenoxy]phenyl propane (BAPP);
trifluoromethyl-2,4-diaminobenzene;
trifluoromethyl-3,5-diaminobenzene;
2,2'-bis(4-aminophenyl)-hexafluoropropane;
2,2-bis(4-phenoxyaniline) isopropylidene;
2,4,6-trimethyl-1,3-diaminobenzene;
4,4'-diamino-2,2'-trifluoromethyl diphenyloxide;
3,3'-diamino-5,5'-trifluoromethyl diphenyloxide;
4,4'-tri-fluoromethyl-2,2'-diamino biphenyl;
2,4,6-trimethyl-1,3-diaminobenzene;
diaminoanthraquinone;
4,4'-oxybis[2-trifluoromethyl)benzenamine](1,2,4-OBABTF);
4,4'-oxybis[(3-trifluoromethyl)benzenanine];
4,4'-thiobis[(2-trifluoromethyl)benzenanine];
4,4'-thiobis[(3-trifluoromethyl)benzenamine];
4,4'-sulfoxylbis[(2-trifluoromethyl)benzenanine];
4,4'-sulfoxylbis[(3-trifluoromethyl)benzenanine];
4,4'-ketobis[(2-trifluoromethyl)benzenamine];
4,4'-[(2,2,2-trifluoromethyl-l-(trifluoromethyl)ethylidine)bis (3-trifluoromethyl)benzenanine];
4,4'-dimethylsilylbis[(3-trifluoromethyl)benzenamine].

The preferred aromatic diamines are TDA, APB, and BAPP due to their excellent properties.

The polyimidesiloxane can be made from 1 to 80 wt% siloxane-containing monomers and 20 to 99 wt% monomers that do not contain siloxane. Preferably, it is made from 1 to 30 wt% siloxane-containing monomers and 70 to 99 wt% monomers that do not contain siloxane. Generally, stoichiometric quantities of diamine and dianhydride are used to obtain the highest molecular weight polyimidesiloxane but the equivalent ratio of dianhydride to diamine can range from 1:2 to 2:1.

The polyimidesiloxanes are typically prepared in solution. The solvent used to form the solution of the polyimidesiloxane must, of course, dissolve the polyimidesiloxane. Suitable solvents depend upon the particular composition of the polyimidesiloxane that is to be made and dissolved, but may include N-methylpyrrolidinone (NMP), diglyme, triglyme, cyclohexanone, cyclopentanone, dimethylacetamide, and mixtures of these solvents. The solvent preferably has a boiling point between 130 and 210°C as lower boiling solvents may evaporate too readily from the completed tape and higher boiling solvents may be too difficult to remove from the tape. The solution of the polyimidesiloxane in the solvent can be any percent solids desired, but it is preferably 10 to 30 wt% solids as more dilute solutions mean more solvent to evaporate and more concentrated solutions are too viscous. A particularly preferred polyimidesiloxane adhesive is made from ODPA, APB, and G₉ in NMP.

The first reaction, which forms the polyamic acid, occurs at room temperature and the second reaction, which closes the imide ring, occurs at a temperature of 150 to 180°C. Typically, the reaction mixture is refluxed several hours to imidize the polymer. A more complete description of the preparation of solvent-soluble fully imidized thermoplastic adhesive polyimidesiloxanes can be found in U.S. Patent 4,973,645.

The carrier film can be made from almost any organic polymeric material to which the polyimidesiloxane can adhere. The polymeric material should have sufficient solvent resistance to the polyimidesiloxane solution to prevent its dissolution. The surface of the carrier film can be prepared to enhance the adhesion of the polyimidesiloxane to it. Such preparation may include treatment with a corona or with various chemicals. Many types of carrier films are sold pretreated to increase their adhesion. Preferably, the carrier film is either an amorphous polymer with a T_{g} greater than 150°C or a crystalline polymer with a melting point greater than 150°C so that it can easily withstand the bonding conditions. Examples of such carrier films include polyimides, polyimidesiloxanes, polyethylene terephthalate, polyetheretherketones, polysulfones, and polyamides, such as nylon 66. The preferred material for the carrier film is a polyimide. The thickness of the carrier film can vary from 13 to 254 µm (½ to 10 mils) but it is preferably about 25 to 51 µm (about 1 to about 2 mils).

The tapes of this invention are made by applying the solution of the polyimidesiloxane to the carrier film and evaporating the solvent from the solution. Typically, the carrier film is positioned horizontally while the solution is spread over its upper surface with a doctor blade. The solvent is then evaporated, the carrier film is inverted, and the procedure is repeated. This can be accomplished by hand or in an automated process. Other methods of manufacturing the tape, such as by dipping or running the carrier film through a solution of the polyimidesiloxane followed by wiping and evaporation, are also contemplated. Repeated applications of the solution may be required to build up the desired thickness of adhesive on the tape. The adhesive layer can have a thickness of 2.5 to 127 µm (0.1 to 5 mils) on each side of the carrier film and a preferred thickness is 13 to 25 µm (0.5 to 1 mils) on each side.

After the tape has been made and the solvent evaporated, the adhesive surfaces are no longer tacky and the tape can be rolled up and stored for use. During use the tape is cut to the desired size and the surfaces to be bonded to it are heated and pressed against it. Typically, a temperature of 200 to 350°C is used and a pressure of 69 kPa to 1.4 MPa (10 to 200 psi). The tape forms a bond quickly and generally the pressure needs to be applied for only 1 to 30 seconds.

Although the tape can be used for many different applications, the principal use contemplated for the tape of this invention is to bond components in the microelectronics industry. Such uses include bonding metal lead frames to integrated circuit chips, chips to lead frames, lead frames to each other, chips to chip carriers and chips to heat spreaders.

The following examples further illustrate this invention.

### Example 1

To a dry 12 liter 3 neck flask equipped with overhead stirrer, thermometer, Dean-Stark trap, and nitrogen inlet on top of the condenser was added 5 liters dry NMP and 750 milliliters of toluene. To this flask, with stirring, was added 503.64 grams( 1.62 moles) ODPA and then 24 grams (.096 mole) G₁ and 96 grams (.114 mole of siloxane diamine with average molecular weight = 841) G₉. The reaction was stirred four hours and then 577.92 grams (1.41 moles) BAPP was added. The reaction was stirred overnight and the next day, 250 milliliters of NMP and 18 grams DABCO was added. The reaction was heated to reflux and water removed. The reflux was maintained for 4 hours with the pot temperature gradually increasing from about 155°C to about 172°C. About 120 cc of an aqueous phase was removed during this period. After this time, vacuum was applied to remove about 35 - 40% of the solvent. The reaction mixture was cooled to about 80°C and precipitated into water. The mixture was filtered, washed, reslurried in deionized water and refiltered. The precipitate was then dried at 105°C for three days.

### Examples 2 - 7

Example 1 was repeated using different monomers. The following table summarizes the preparation of these polyimidesiloxane adhesives:

The Glass Transition Temperature Tg was determined by Dynamic Mechanical Thermal Analysis (DMTA). The Tg is taken as the temperature at which the dissipation Tan delta peaks at a heating rate of 4°C/min in tension mode at 1 Hz.

| Example | Dianhydride (pbw) | Diamine (pbw) | Siloxane Diamine (pbw) | Tg/°C |
|---|---|---|---|---|
| 1 | 503.64 ODPA | 577.92 BAPP | 24 G₁ + 96 G₉ (MW = 841) | 208 |
| 2 | 490.8 ODPA | 610.4 BAPP | 100.28 G₁₃ (MW = 1108) | 227 |
| 3 | 71.95 ODPA +34.42 6FDA | 28.36 TDA | 67.73 G₉ (MW = 841) | 215 |
| 4 | 38.93 ODPA | 23.65 APB | 37.5 G₉ (MW = 841) | 124 |
| 5 | 241.16 BTDA | 63.91 TDA | 194.93 G₉ (MW = 867) | 185 |
| 6 | 45.7 BPDA | 40.8 APB | 1.0 G₁ + 10.0 G₉ (MW = 841) | 187 |
| 7 | 167.15 ODPA | 21.64 TDA | 311.21 G₉ (MW = 860) | 62 |

### Example 8

The polyimidesiloxane of Example 1 was heated in nitrogen at 190°C for 15 hours to increase the molecular weight and then dissolved in NMP and the solution filtered through a 5 µm cartridge filter to give about 3.5 liters of a solution having 21% by weight solids and a viscosity of 9.5 Pa·s (95 poise). This solution was further diluted with about 100 cc of NMP to decrease viscosity and then used to coat Upilex SGA polyimide (from Ube). This polyimide was used in a 30.5 cm (12'') width and 51 µm (2 mil) thickness in roll form. The polyimide sheet was passed through a two roll coater equipped with a trough containing the polyimidesiloxane solution and a knife to control thickness and then through a two zone heated oven with zone 1 (12.2 m (forty feet) length) set at 93°C and zone 2 (33.5 m (one hundred and ten feet) length) set at 177°C. The polyimide was coated at a rate of 7.6 m (25 feet) per minute. After the first side was coated, the single sided sheet was passed through the coater a second time under the same conditions to give a polyimide coated on each side with the polyimidesiloxane of Example 1. The total thickness of the sheet was 91 µm (3.6 mils).

### Example 9

The polyimidesiloxane of Example 2 was dissolved in NMP and the solution filtered through a 5 µm cartridge filter to give about 3.5 liters of a solution having 16% by weight solids and a viscosity of 0.9 Pa·s (9.0 poise). This polyimidesiloxane was used as in Example 8 to give a polyimide coated on each side with the polyimidesiloxane of Example 2. The total thickness of the sheet was 91 µm (3.6 mils).

### Example 10

The polyimidesiloxane of Example 3 was heated at 200°C for 19 hours to increase the molecular weight and then dissolved in NMP and the solution filtered through a 5 µm cartridge filter to give about 3.5 liters of a solution having 24% by weight solids and a viscosity of 0.75 Pa·s (7.5 poise). This polyimidesiloxane was used as in Example 8 to give a polyimide coated on each side with the polyimidesiloxane of Example 3. The total thickness of the sheet was 91 µm (3.6 mils).

### Example 11

The polyimidesiloxane of Example 4 was dissolved in cyclohexanone to give a form a homogeneous but hazy solution containing 25% by weight solids. Strips of PET (polyethyleneterephthalate) film 127 µm (5 mils) thick and about 1.3 cm (0.5 inch) wide were dipped in the polymer solution then hung up to drain off and air dry for 5 days. The coated film was about 160 µm (6.3 mils) thick.

### Example 12

A nylon 6-6 film which is about 102 µm (4 mils) thick was coated as in example 11. The coated film was about 152 µm (6 mils) thick.

### Example 13

The polyimidesiloxane of Example 5 was dissolved in cyclohexanone to give a solution containing 25% by weight solids. A strip of 51 µm (2 mils) thick Kapton H was dipped in the solution and allowed to drain off. The coated strip was then dried in a 150°C oven for about 1 hour. The coated film was about 102 µm (4 mils) thick.

### Example 14

The polyimidesiloxane of Example 6 was dissolved in NMP to give a solution containing 25% by weight solids. A strip of 51 µm (2 mils) thick polyimide film (Kapton H from DuPont) was dipped in this solution and allowed to drain off and air dry. It was dried further in a 200°C oven for about 1 hour.

### Example 15

Example 14 was repeated except that 25 µm (1 mil) thick Kapton H was used.

### Example 16

The polyimidesiloxane of Example 6 was dissolved in diglyme to give a solution containing 40 % by weight solids. The solution was filtered through a 10 micron filter and then a 1 µm filter. Strips of Kapton H, 5.9 cm (2 5/16 inches) wide and 51 µm (2 mils) thick and about 15 cm (6 inches) long were passed through the above solution and hung up to air dry for several days.

### Example 17

A strip (about 1 cm²) was cut from the coated tape of Example 8 and placed between a strip of alloy 42 metal and the coated side of a piece of silicon wafer precoated with a PMDA-ODA polymer. (This precoating was done by spinning a solution of 0.17 % 3-aminopropyltriethoxysilane on a 10 cm (4 inch) silicon wafer for 30 seconds at 5000 rpm, then a 15 % solution of PMDA- 4,4'ODA polyamic acid in 75/25 NMP/xylene for 30 seconds at 3000 rpm and drying at 5° C/minute to 350° C/60 minute in a nitrogen atmosphere). The assembly was placed on a hot plate at 275°C and with no pressure for 10 seconds. Then 2.5 kg (5.5 pounds) of pressure was applied for 10 seconds and the assembly was removed and the adhesion tested on a HMP model 1750 die shear tester. Four assemblies were tested and averaged to give a shear adhesion of greater than 25 kg/cm².

### Examples 18 - 25

Example 17 was repeated using the tape of Examples 9 to 16. The following table gives the results:

| Example | Tape from Example | Hot Plate Temperature (°C) | Shear Adhesion (kg/cm²) |
|---|---|---|---|
| 17 | 8 | 275 | >25 |
| 18 | 9 | 350 | >25 |
| 19 | 10 | 275 | >25 |
| 20 | 11 | 225 | >25 |
| 21 | 12 | 225 | >25 |
| 22 | 13 | 275 | >25 |
| 22A | 13(A)¹ | 275 | >25 |
| 22B | 13(B)² | 275 | >25 |
| 23 | 14 | 275 | >25 |
| 24 | 15 | 275 | >25 |
| 25 | 16 | 250 | >25 |

| | | | |
|---|---|---|---|
| ¹ Same as Example 13, but between copper and an uncoated silicon wafer. | | | |
| ² Same as Example 13, but between ceramic and an uncoated silicon wafer. | | | |

These examples demonstrate that the trilayer films of this invention can be used to form strong bonds between various surfaces.

## Claims (Claims for the following Contracting State(s): DE, FR, GB)

1. An adhesive tape comprising a carrier film sandwiched between two layers of fully imidized thermoplastic polyimidesiloxane adhesive, characterized in that the adhesive tape is rolled up.

2. An adhesive tape comprising a carrier film sandwiched between two layers of fully imidized thermoplastic polyimidesiloxane adhesive with the proviso that an adhesive tape wherein an adhesive obtained by reacting at least one of the following acid components:
4,4'-oxydiphthalic acid dianhydride, 3,3',4,4'-biphenyltetracarboxylic acid dianhydride and/or 3,3',4,4'-benzophenonetetracarboxylic acid dianhydride, 1,2,4,5-benzenetetracarboxylic acid dianhydride (PMDA), 2,2'-bis (4-(3,4-dicarboxyphenyl)phenyl)propane or 3,3',4,4'-diphenylsulfonetetracarboxylic acid dianhydride,
with at least one of the following amine components:
a siloxane compound represented by the following general formula (1) and/or 2,2-bis(4-(4-aminophenoxy)phenyl)propane 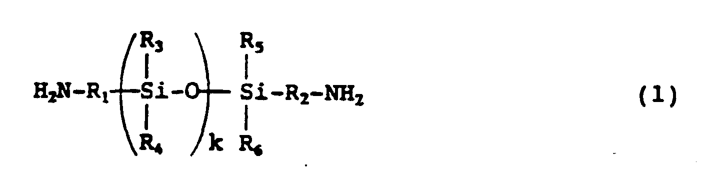
wherein R₁ and R₂ are each a bivalent aliphatic (C₁-C₄) or aromatic group; R₃, R₄, R₅ and R₆ are each a mono-valent aliphatic or aromatic group; and k is an integer of 1-20,
bis(aminophenoxy)benzene and/or dimethylphenylene-diamine, 4,4'-diaminodiphenyl ether (4,4'-DDE), 3,3'-diaminodiphenyl ether (3,3'-DDE), 3,4'-diaminodiphenyl ether (3,4'-DDE), 4,4'-diaminodiphenylsulfone (4,4'-DDS), 3,3'-diaminodiphenylsulfone (3,3'-DDS), 2,2-bis-4-aminophenylhexafluoropropane (BAPF), 2,2-bis-4-aminophenoxyphenylhexafluoropropane (BAPPF), bis-4-(4-aminophenoxy)phenylsulfone (BAPS), bis-4-(3-aminophenoxy)phenylsulfone (BAPSM), 4,4'-diaminobenzanilide (DABAN), m-phenylenediamine, p-phenylenediamine, 4,4'-diaminodiphenylmethane (DDM) or 2,4-diaminotoluene and applied on both sides of a carrier consisting of a polyimide film or a biaxially stretched polyester film, is excluded.

3. An adhesive tape according to Claim 1 or 2 wherein said carrier film is selected from polyimide, polyimidesiloxane, polyethylene terephthalate, and polyamide.

4. An adhesive tape according to Claim 1 or 2 wherein said carrier film is polyimide.

5. An adhesive tape according to Claim 1 or 2 wherein said carrier film is 13 to 254 µm (½ to 10 mils) thick.

6. An adhesive tape according to Claim 1 or 2 wherein said polyimidesiloxane adhesive comprises the reaction product of an aromatic dianhydride, a non-siloxane containing diamine, and siloxane containing diamine.

7. An adhesive tape according to Claim 6 wherein said siloxane diamine comprises 1 to 70 wt% of said polyimidesiloxane.

8. An adhesive tape according to Claim 6 wherein said aromatic dianhydride is selected from the group consisting of benzophenone tetracarboxylic acid dianhydride, oxydiphthalic anhydride, biphenyl dianhydride, 6FDA, pyromellitic dianhydride, and mixtures thereof.

9. An adhesive tape according to Claim 8 wherein said aromatic dianhydride is oxydiphthalic anhydride.

10. An adhesive tape according to Claim 6 wherein said non-siloxane containing diamine is selected form the group consisting of toluene diamine, 1,3-bis(3-aminophenoxy)benzene, and 2,2-bis(4[4-aminophenoxy]phenyl)propane.

11. An adhesive tape according to Claim 6 wherein said siloxane diamine has the formula 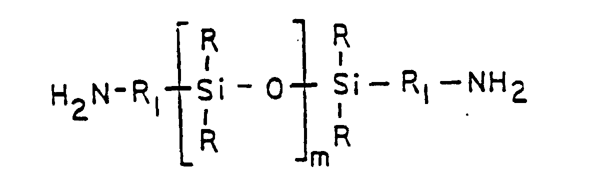 where R is a monovalent radical and R₁ is a divalent radical and each R and R₁ are independently selected from substituted or unsubstituted 1 to 12 carbon atom aliphatic group and substituted and unsubstituted 6 to 10 carbon atom aromatic group and m is 1 to 200.

12. An adhesive tape according to Claim 11 wherein said aromatic dianhydride is oxydiphthalic anhydride, said non-siloxane containing diamine is 1,3-bis(3-aminophenoxy)benzene and "m" in the formula for said siloxane diamine is 9.

13. A method of making an adhesive tape comprising
A. forming a solution in a solvent of a fully imidized polyimidesiloxane;
B. applying said solution to both surfaces of a carrier film;
C. evaporating the solvent from said solution; and
D. rolling said tape up.

14. A method according to Claim 13 wherein said solution is applied first to one surface of said carrier film and the solvent is evaporated and then said solution is applied to the other surface of said film and then the solvent is evaporated.

15. A method according to Claim 13 wherein said solution of polyimidesiloxane is formed by dissolving in said solvent an aromatic dianhydride, a non-siloxane containing diamine, and a siloxane containing diamine, heating said solution to form a polyamic acid, and further heating said solution to form a polyimidesiloxane.

16. A method according to Claim 13 wherein the boiling point of said solvent is 130 to 210°C.

17. A method according to Claim 13 wherein said solution is 10 to 30 wt% solids.

18. A method of bonding two surfaces together comprising placing the adhesive tape of claims 1 to 12 between two surfaces and pressing two said surfaces together at a temperature of 200 to 350°C at pressure of 69 kPa to 1.4 MPa (10 to 200 psi) for 1 to 30 seconds.

19. A method according to Claim 18 wherein said surfaces are a metal lead frame and an integrated circuit chip.

## Claims (Claims for the following Contracting State(s): ES, IT)

1. An adhesive tape comprising a carrier film sandwiched between two layers of fully imidized thermoplastic polyimidesiloxane adhesive.

2. An adhesive tape according to Claim 1 wherein said carrier film is selected from polyimide, polyimidesiloxane, polyethylene terephthalate, and polyamide.

3. An adhesive tape according to Claim 1 wherein said carrier film is polyimide.

4. An adhesive tape according to Claim 1 wherein said carrier film is 13 to 254 µm (½ to 10 mils) thick.

5. An adhesive tape according to Claim 1 wherein said polyimidesiloxane adhesive comprises the reaction product of an aromatic dianhydride, a non-siloxane containing diamine, and siloxane containing diamine.

6. An adhesive tape according to Claim 5 wherein said siloxane diamine comprises 1 to 70 wt% of said polyimidesiloxane.

7. An adhesive tape according to Claim 5 wherein said aromatic dianhydride is selected from the group consisting of benzophenone tetracarboxylic acid dianhydride, oxydiphthalic anhydride, biphenyl dianhydride, 6FDA, pyromellitic dianhydride, and mixtures thereof.

8. An adhesive tape according to Claim 7 wherein said aromatic dianhydride is oxydiphthalic anhydride.

9. An adhesive tape according to Claim 5 wherein said non-siloxane containing diamine is selected form the group consisting of toluene diamine, 1,3-bis(3-aminophenoxy)benzene, and 2,2-bis(4[4-aminophenoxy]phenyl)propane.

10. An adhesive tape according to Claim 5 wherein said siloxane diamine has the formula 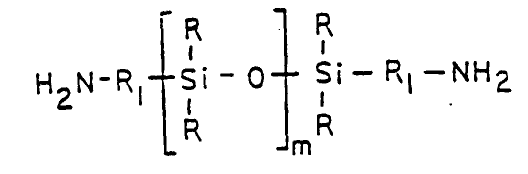 where R is a monovalent radical and R₁ is a divalent radical and each R and R₁ are independently selected from substituted or unsubstituted 1 to 12 carbon atom aliphatic group and substituted and unsubstituted 6 to 10 carbon atom aromatic group and m is 1 to 200.

11. An adhesive tape according to Claim 10 wherein said aromatic dianhydride is oxydiphthalic anhydride, said non-siloxane containing diamine is 1,3-bis(3-aminophenoxy)benzene and "m" in the formula for said siloxane diamine is 9.

12. A method of making an adhesive tape comprising
A. forming a solution in a solvent of a fully imidized polyimidesiloxane;
B. applying said solution to both surfaces of a carrier film; and
C. evaporating the solvent from said solution.

13. A method according to Claim 12 wherein said solution is applied first to one surface of said carrier film and the solvent is evaporated and then said solution is applied to the other surface of said film and then the solvent is evaporated.

14. A method according to Claim 12 wherein said solution of polyimidesiloxane is formed by dissolving in said solvent an aromatic dianhydride, a non-siloxane containing diamine, and a siloxane containing diamine, heating said solution to form a polyamic acid, and further heating said solution to form a polyimidesiloxane.

15. A method according to Claim 12 wherein the boiling point of said solvent is 130 to 210°C.

16. A method according to Claim 12 wherein said solution is 10 to 30 wt% solids.

17. A method of bonding two surfaces together comprising placing the adhesive tape of claims 1 to 11 between two surfaces and pressing two said surfaces together at a temperature of 200 to 350°C at pressure of 69 kPa to 1.4 MPa (10 to 200 psi) for 1 to 30 seconds.

18. A method according to Claim 17 wherein said surfaces are a metal lead frame and an integrated circuit chip.

19. A method according to Claim 12 including the additional last step of rolling said tape up.

20. A rolled up tape made according to the method of Claim 19.

## Patentansprüche (Patentansprüche für folgende(n) Vertragsstaat(en): DE, FR, GB)

1. Klebeband, umfassend einen Trägerfilm, der zwischen zwei Schichten aus vollständig imidisiertem thermoplastischen Polyimidsiloxanklebstoff liegt, dadurch gekennzeichnet, daß das Klebeband aufgewickelt wird.

2. Klebeband, umfassend einen Trägerfilm, der zwischen zwei Schichten aus vollständig imidisiertem thermoplastischen Polyimidsiloxanklebstoff liegt mit der Maßgabe, daß ein Klebeband, in dem ein Klebstoff, erhalten durch Umsetzen mindestens einer der folgenden Säurekomponenten:
4,4'-Oxydiphthalsäure-Dianhydrid, 3,3',4,4'-Biphenyltetracarbonsäure-Dianhydrid und/oder 3,3',4,4'-Benzophenontetracarbonsäure-Dianhydrid,
1,2,4,5-Benzoltetracarbonsäure-Dianhydrid (PMDA), 2,2'-Bis(4-(3,4-dicarboxyphenyl)phenyl)propan oder 3,3'-4,4'-Diphenylsulfontetracarbonsäure-Dianhydrid
mit mindestens einer der folgenden Aminkomponenten:
einer Siloxanverbindung der folgenden allgemeinen Formel (1) und/oder 2,2-Bis(4-(4-aminophenoxy)phenylpropan 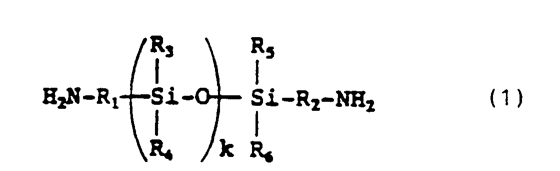
in der R₁ und R₂ jeweils ein zweiwertiger aliphatischer (C₁-C₄) oder aromatischer Rest sind, R₃, R₄, R₅ und R₆ jeweils ein einwertiger aliphatischer oder aromatischer Rest sind und k eine ganze Zahl von 1 bis 20 ist,
Bis(aminophenoxy)benzol und/oder Dimethylphenylendiamin, 4,4'-Diaminodiphenylether (4,4'-DDE), 3,3'-Diaminodiphenylethylether (3,3'-DDE), 3,4'-Diaminodiphenylether (3,4'-DDE), 4,4'-Diaminodiphenylsulfon (4,4'-DDS), 3,3'-Diaminodiphenylsulfon (3,3'-DDS), 2,2-Bis-4-aminophenylhexafluorpropan (BAPF), 2,2-Bis-4-aminophenoxyphenylhexafluorpropan (BAPPF), Bis-4-(4-aminophenoxy)phenylsulfon (BAPS), Bis-4-(3-aminophenoxy)phenylsulfon (BAPSM), 4,4'-Diaminobenzanilid (DABAN), m-Phenylendiamin, p-Phenylendiamin, 4,4'-Diaminodiphenylmethan (DDM) oder 2,4-Diaminotoluol
und aufgebracht auf beide Seiten eines aus einem Polyimidfilm oder einem biaxial gereckten Polyesterfilm bestehenden Trägers ausgeschlossen ist.

3. Klebeband nach Anspruch 1 oder 2, bei dem der Trägerfilm aus Polyimid, Polyimidsiloxan, Polyethylenterephthalat und Polyamid ausgewählt wird.

4. Klebeband nach Anspruch 1 oder 2, bei dem der Trägerfilm Polyimid ist.

5. Klebeband nach Anspruch 1 oder 2, bei dem der Trägerfilm 13 bis 254 µm (1/2 bis 10 mils) dick ist.

6. Klebeband nach Anspruch 1 oder 2, in dem der Polyimidsiloxan-Klebstoff das Reaktionsprodukt aus einem aromatischen Dianhydrid, einem kein Siloxan enthaltenden Diamin und einem Siloxan enthaltenden Diamin umfaßt.

7. Klebeband nach Anspruch 6, bei dem das Siloxandiamin 1 bis 70 Gew.-% des Polyimidsiloxans umfaßt.

8. Klebeband nach Anspruch 6, bei dem das aromatische Dianhydrid aus der Gruppe Benzophenontetracarbonsäure-Dianhydrid, Oxydiphthalsäure-Anhydrid, Biphenyl-Dianhydrid, 6FDA, Pyromellithsäure-Dianhydrid und deren Mischungen ausgewählt wird.

9. Klebeband nach Anspruch 8, bei dem das aromatische Dianhydrid Oxydiphthalsäure-Anhydrid ist.

10. Klebeband nach Anspruch 6, in dem das kein Siloxan enthaltende Diamin aus der Gruppe Toluoldiamin, 1,3-Bis(3-aminophenoxy)benzol und 2,2-Bis(4[4-aminophenoxy]phenyl)propan ausgewählt wird.

11. Klebeband nach Anspruch 6, in dem das Siloxandiamin die Formel 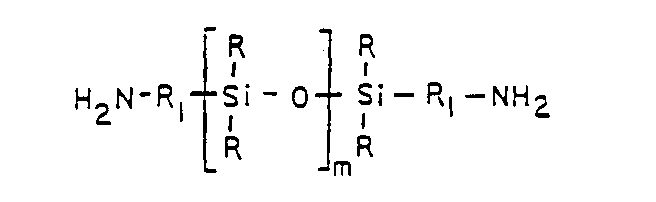 hat, in der R ein einwertiger Rest und R₁ ein zweiwertiger Rest ist und R und R₁ jeweils unabhängig voneinander aus einem substituierten oder unsubstituierten aliphatischen Rest mit 1 bis 12 Kohlenstoffatomen und einem substituierten oder unsubstituierten aromatischen Rest mit 6 bis 10 Kohlenstoffatomen ausgewählt werden und m 1 bis 200 ist.

12. Klebeband nach Anspruch 11, bei dem das aromatische Dianhydrid Oxydiphthalsäure-Anhydrid ist, das kein Siloxan enthaltende Diamin 1,3-Bis(3-aminophenoxy)benzol ist und "m" in der Formel für das Siloxandiamin 9 ist.

13. Verfahren zur Herstellung eines Klebebands, umfassend
A. Herstellung einer Lösung in einem Lösungsmittel aus einem vollständig imidisierten Polyimidsiloxan;
B. Aufbringen der Lösung auf beide Oberflächen eines Trägerfilms;
C. Verdampfen des Lösungsmittels aus der Lösung und
D. Aufwickeln des Bandes.

14. Verfahren nach Anspruch 13, bei dem die Lösung zuerst aufeine Oberfläche des Trägerfilms aufgebracht und das Lösungsmittel verdampft wird und diese Lösung dann auf die andere Oberfläche des Films aufgebracht und das Lösungsmittel anschließend verdampft wird.

15. Verfahren nach Anspruch 13, bei dem die Lösung aus Polyimidsiloxan durch Auflösen eines aromatischen Dianhydrids, eines kein Siloxan enthaltenden Diamins und eines Siloxan enthaltenden Diamins im Lösungsmittel, Erwärmen der Lösung zur Herstellung einer Polyaminsäure und weiteres Erwärmen der Lösung zur Herstellung eines Polyimidsiloxans hergestellt wird.

16. Verfahren nach Anspruch 13, bei dem der Siedepunkt des Lösungsmittels 130 bis 210°C beträgt.

17. Verfahren nach Anspruch 13, bei dem die Lösung zu etwa 10 bis 30 Gew.-% aus Feststoffen besteht.

18. Verfahren zum Verbinden zweier Oberflächen miteinander, umfassend das Aufbringen des Klebebands nach Anspruch 1 bis 12 zwischen zwei Oberflächen und Zusammenpressen der beiden Oberflächen bei einer Temperatur von 200 bis 350°C und einem Druck von 69 kPa bis 1,4 MPa (10 bis 200 psi) für 1 bis 30 Sekunden.

19. Verfahren nach Anspruch 18, bei dem es sich bei den Oberflächen um einen Anschlußdrahtrahmen und einen Chip für einen integrierten Schaltkreis handelt.

## Patentansprüche (Patentansprüche für folgende(n) Vertragsstaat(en): ES, IT)

1. Klebeband, umfassend einen Trägerfilm, der zwischen zwei Schichten aus vollständig imidisiertem thermoplastischen Polyimidsiloxanklebstoff liegt.

2. Klebeband nach Anspruch 1, bei dem der Trägerfilm aus Polyimid, Polyimidsiloxan, Polyethylenterephthalat und Polyamid ausgewählt wird.

3. Klebeband nach Anspruch 1, bei dem der Trägerfilm Polyimid ist.

4. Klebeband nach Anspruch 1, bei dem der Trägerfilm 13 bis 254 µm (1/2 bis 10 mils) dick ist.

5. Klebeband nach Anspruch 1, in dem der Polyimidsiloxan-Klebstoff das Reaktionsprodukt aus einem aromatischen Dianhydrid, einem kein Siloxan enthaltenden Diamin und einem Siloxan enthaltenden Diamin umfaßt.

6. Klebeband nach Anspruch 5, bei dem das Siloxandiamin 1 bis 70 Gew.-% des Polyimidsiloxans umfaßt.

7. Klebeband nach Anspruch 5, bei dem das aromatische Dianhydrid aus der Gruppe Benzophenontetracarbonsäure-Dianhydrid, Oxydiphthalsäure-Anhydrid, Biphenyl-Dianhydrid, 6FDA, Pyromellithsäure-Dianhydrid und deren Mischungen ausgewählt wird.

8. Klebeband nach Anspruch 7, bei dem das aromatische Dianhydrid Oxydiphthalsäure-Anhydrid ist.

9. Klebeband nach Anspruch 5, in dem das kein Siloxan enthaltende Diamin aus der Gruppe Toluoldiamin, 1,3-Bis(3-aminophenoxy)benzol und 2,2-Bis(4[4-aminophenoxy]phenyl)propan ausgewählt wird.

10. Klebeband nach Anspruch 5, in dem das Siloxandiamin die Formel 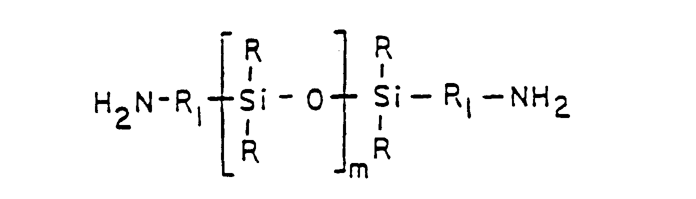 hat, in der R ein einwertiger Rest und R₁ ein zweiwertiger Rest ist und R und R₁ jeweils unabhängig voneinander aus einem substituierten oder unsubstituierten aliphatischen Rest mit 1 bis 12 Kohlenstoffatomen und einem substituierten oder unsubstituierten aromatischen Rest mit 6 bis 10 Kohlenstoffatomen ausgewählt werden und m 1 bis 200 ist.

11. Klebeband nach Anspruch 10, bei dem das aromatische Dianhydrid Oxydiphthalsäure-Anhydrid ist, das kein Siloxan enthaltende Diamin 1,3-Bis(3-aminophenoxy)benzol ist und "m" in der Formel für das Siloxandiamin 9 ist.

12. Verfahren zur Herstellung eines Klebebands, umfassend
A. Herstellung einer Lösung in einem Lösungsmittel aus einem vollständig imidisierten Polyimidsiloxan;
B. Aufbringen der Lösung auf beide Oberflächen eines Trägerfilms und
C. Verdampfen des Lösungsmittels aus der Lösung.

13. Verfahren nach Anspruch 12, bei dem die Lösung zuerst aufeine Oberfläche des Trägerfilms aufgebracht und das Lösungsmittel verdampft wird und diese Lösung dann auf die andere Oberfläche des Films aufgebracht und das Lösungsmittel anschließend verdampft wird.

14. Verfahren nach Anspruch 12, bei dem die Lösung aus Polyimidsiloxan durch Auflösen eines aromatischen Dianhydrids, eines kein Siloxan enthaltenden Diamins und eines Siloxan enthaltenden Diamins im Lösungsmittel, Erwärmen der Lösung zur Herstellung einer Polyaminsäure und weiteres Erwärmen der Lösung zur Herstellung eines Polyimidsiloxans hergestellt wird.

15. Verfahren nach Anspruch 12, bei dem der Siedepunkt des Lösungsmittels 130 bis 210°C beträgt.

16. Verfahren nach Anspruch 12, bei dem die Lösung zu etwa 10 bis 30 Gew.-% aus Feststoffen besteht.

17. Verfahren zum Verbinden zweier Oberflächen miteinander, umfassend das Aufbringen des Klebebands nach Anspruch 1 bis 11 zwischen zwei Oberflächen und Zusammenpressen der beiden Oberflächen bei einer Temperatur von 200 bis 350°C und einem Druck von 69 kPa bis 1,4 MPa (10 bis 200 psi) für 1 bis 30 Sekunden.

18. Verfahren nach Anspruch 17, bei dem es sich bei den Oberflächen um einen Anschlußdrahtrahmen und einen Chip für einen integrierten Schaltkreis handelt.

19. Verfahren nach Anspruch 12, das zusätzlich als letzten Schritt das Aufwickeln des Bandes einschließt.

20. Aufgewickeltes Band, das nach dem Verfahren von Anspruch 19 hergestellt wurde.

## Revendications (Revendications pour l'(les) Etat(s) contractant(s) suivant(s): DE, FR, GB)

1. Bande adhésive comprenant un film support pris en sandwich entre deux couches d'adhésif polyimidesiloxane thermoplastique entièrement imidisé, caractérisée en ce que la bande adhésive est enroulée.

2. Bande adhésive comprenant un film support pris en sandwich entre deux couches d'adhésif polyimidesiloxane thermoplastique entièrement imidisé, à condition qu'une bande adhésive dans laquelle un adhésif obtenu en faisant réagir au moins un des composants acide suivants :
le dianhydride de l'acide 4,4'-oxydiphtalique, le dianhydride de l'acide 3,3', 4,4'-biphényltétracarboxylique et/ou le dianhydride de l'acide 3,3',4,4'-benzophénonetétracarboxylique, le dianhydride de l'acide 1,2,4,5-benzène-tétracarboxylique (PMDA), le 2,2'-bis(4-(3,4-dicarboxyphényl)-phényl)-propane ou le dianhydride de l'acide 3,3',4,4'-di-phénylsulfonetétracarboxylique,
avec au moins un des composants amine suivants :
un composé siloxane représenté par la formule générale suivante (1) et/ou le 2,2-bis(4-(4-aminophénoxy)phényl)-propane : 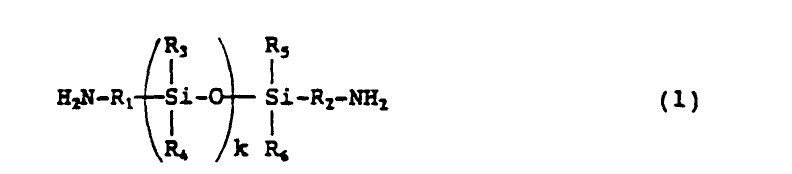
dans laquelle R₁ et R₂ sont chacun un groupe aliphatique (en C₁ à C₄) ou aromatique; R₃, R₄, R₅ et R₆ sont chacun un groupe aliphatique ou aromatique monovalent; et k est un nombre entier de 1 à 20,
le bis(aminophénoxy)benzène et/ou la diméthylphénylène-diamine, l'éther 4,4'-diaminodiphénylique (4,4'-DDE), l'éther 3,3'-diaminodiphénylique (3,3'-DDE), l'éther 3,4'-diaminodiphénylique (3,4'-DDE), la 4,4'-diaminodiphénylsulfone (4,4'-DDS), la 3,3'-diaminodiphénylsulfone (3,3'-DDS), le 2,2-bis-4-aminophénylhexafluoropropane (BAPF), le 2,2-bis-4-aminophénoxyphénylhexafluoropropane (BAPPF), la bis-4-(4-aminophénoxy)phénylsulfone (BAPS), la bis-4-(3-aminophénoxy)-phénylsulfone (BAPSM), le 4,4'-diaminobenzanilide (DABAN), la m-phénylènediamine, la p-phénylènediamine, le 4,4'-diaminodiphénylméthane (DDM) ou le 2,4-diaminotoluène et appliqué sur les deux côtés d'un véhicule composé d'un film polyimide ou d'un film polyester biaxialement étiré, soit exclue.

3. Bande adhésive selon la revendication 1 ou 2, dans laquelle ledit film support est choisi parmi le polyimide, le polyimidesiloxane, le poly(téréphtalate d'éthylène) et le polyamide.

4. Bande adhésive selon la revendication 1 ou 2, dans laquelle ledit film support est le polyimide.

5. Bande adhésive selon la revendication 1 ou 2, dans laquelle ledit film support a une épaisseur de 13 à 254 µm (1/2 à 10 mils).

6. Bande adhésive selon la revendication 1 ou 2, dans laquelle ledit adhésif polyimidesiloxane comprend le produit réactionnel d'un dianhydride aromatique, d'une diamine ne contenant pas de siloxane et d'une diamine contenant un siloxane.

7. Bande adhésive selon la revendication 6, dans laquelle ladite siloxanediamine comprend 1 à 70 % en poids dudit polyimidesiloxane.

8. Bande adhésive selon la revendication 6, dans laquelle ledit dianhydride aromatique est choisi dans le groupe formé par le dianhydride de l'acide benzophénone tétracarboxylique, l'anhydride oxydiphtalique, le dianhydride biphénylique, 6FDA, le dianhydride pyromellitique et leurs mélanges.

9. Bande adhésive selon la revendication 8, dans laquelle ledit dianhydride aromatique est l'anhydride oxydiphtalique.

10. Bande adhésive selon la revendication 6, dans laquelle ladite diamine ne contenant pas de siloxane est choisie dans le groupe formé par la toluène-diamine, le 1,3-bis(3-aminophénoxy)benzène et le 2,2-bis(4[4-aminophénoxy]-phényl)propane.

11. Bande adhésive selon la revendication 6, dans laquelle ladite siloxanediamine possède la formule : 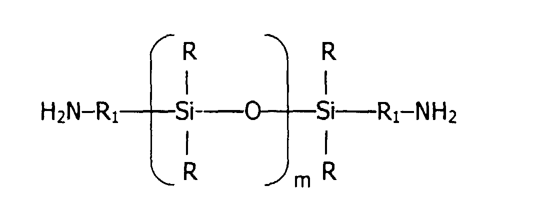 où R est un radical monovalent et R₁ est un radical divalent et chaque R et R₁ sont indépendamment choisis parmi un groupe aliphatique de 1 à 12 atomes de carbone substitué ou non substitué et un groupe aromatique de 6 à 10 atomes de carbone substitué ou non substitué et m vaut 1 à 200.

12. Bande adhésive selon la revendication 11, dans laquelle ledit dianhydride aromatique est l'anhydride oxydiphtalique, ladite diamine ne contenant pas de siloxane est le 1,3-bis(3-aminophénoxy)benzène et "m" dans la formule pour ladite siloxanediamine vaut 9.

13. Procédé pour fabriquer une bande adhésive consistant :
A. à former une solution dans un solvant d'un polyimide-siloxane entièrement imidisé ;
B. à appliquer ladite solution sur les deux surfaces d'un film support ;
C. à évaporer le solvant à partir de ladite solution ; et
D. à enrouler ladite bande.

14. Procédé selon la revendication 13, dans lequel ladite solution est appliquée d'abord sur une surface dudit film support et le solvant est évaporé, puis ladite solution est appliquée à l'autre surface dudit film puis le solvant est évaporé.

15. Procédé selon la revendication 13, dans lequel ladite solution de polyimidesiloxane est formée en dissolvant dans ledit solvant un dianhydride aromatique, une diamine ne contenant pas de siloxane et une diamine contenant un siloxane, en chauffant ladite solution pour former un acide polyamique et en chauffant de plus ladite solution pour former un polyimidesiloxane.

16. Procédé selon la revendication 13, dans lequel le point d'ébullition dudit solvant est de 130 à 210°C.

17. Procédé selon la revendication 13, dans lequel ladite solution représente 10 à 30 % en poids de solides.

18. Procédé pour lier ensemble deux surfaces consistant à placer la bande adhésive selon les revendications 1 à 12 entre deux surfaces et à presser lesdites deux surfaces ensemble à une température d'environ 200 à 350°C à une pression de 69 kPa à 1,4 MPa (10 à 200 psi) pendant 1 à 30 secondes.

19. Procédé selon la revendication 18, dans lequel lesdites surfaces sont un cadre conducteur métallique et une puce à circuit intégré.

## Revendications (Revendications pour l'(les) Etat(s) contractant(s) suivant(s): ES, IT)

1. Bande adhésive comprenant un film support pris en sandwich entre deux couches d'adhésif polyimidesiloxane thermoplastique entièrement imidisé.

2. Bande adhésive selon la revendication 1, dans laquelle ledit film support est choisi parmi le polyimide, le polyimidesiloxane, le poly(téréphtalate d'éthylène) et le polyamide.

3. Bande adhésive selon la revendication 1, dans laquelle ledit film support est le polyimide.

4. Bande adhésive selon la revendication 1, dans laquelle ledit film support a une épaisseur de 13 à 254 µm (1/2 à 10 mils).

5. Bande adhésive selon la revendication 1, dans laquelle ledit adhésif polyimidesiloxane comprend le produit réactionnel d'un dianhydride aromatique, d'une diamine ne contenant pas de siloxane et d'une diamine contenant un siloxane.

6. Bande adhésive selon la revendication 5, dans laquelle ladite siloxanediamine comprend 1 à 70 % en poids dudit polyimidesiloxane.

7. Bande adhésive selon la revendication 5, dans laquelle le dianhydride aromatique est choisi dans le groupe formé par le dianhydride de l'acide benzophénone tétracarboxylique, l'anhydride oxydiphtalique, le dianhydride biphénylique, 6FDA, le dianhydride pyromellitique et leurs mélanges.

8. Bande adhésive selon la revendication 7, dans laquelle ledit dianhydride aromatique est l'anhydride oxydiphtalique.

9. Bande adhésive selon la revendication 5, dans laquelle ladite diamine ne contenant pas de siloxane est choisie dans le groupe formé par la toluènediamine, le 1,3-bis(3-aminophénoxy)benzène et le 2,2-bis(4[4-aminophénoxy]-phényl)propane.

10. Bande adhésive selon la revendication 5, dans laquelle ladite siloxanediamine possède la formule : 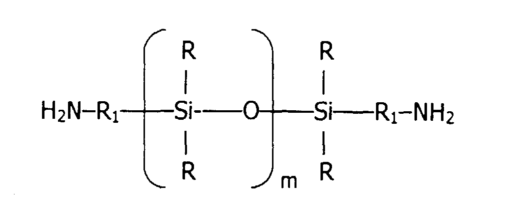 où R est un radical monovalent et R₁ est un radical divalent et chaque R et R₁ sont indépendamment choisis parmi un groupe aliphatique de 1 à 12 atomes de carbone substitué ou non substitué et un groupe aromatique de 6 à 10 atomes de carbone substitué ou non substitué et m vaut 1 à 200.

11. Bande adhésive selon la revendication 10, dans laquelle ledit dianhydride aromatique est l'anhydride oxydiphtalique, ladite diamine ne contenant pas de siloxane est le 1,3-bis(3-aminophénoxy)benzène et "m" dans la formule pour ladite siloxanediamine vaut 9.

12. Procédé pour fabriquer une bande adhésive consistant :
A. à former une solution dans un solvant d'un polyimide-siloxane entièrement imidisé ;
B. à appliquer ladite solution sur les deux surfaces d'un film support ; et
C. à évaporer le solvant à partir de ladite solution.

13. Procédé selon la revendication 12, dans lequel ladite solution est appliquée d'abord sur une surface dudit film support et le solvant est évaporé, puis ladite solution est appliquée à l'autre surface dudit film puis le solvant est évaporé.

14. Procédé selon la revendication 12, dans lequel ladite solution de polyimidesiloxane est formée en dissolvant dans ledit solvant un dianhydride aromatique, une diamine ne contenant pas de siloxane et une diamine contenant un siloxane, en chauffant ladite solution pour former un acide polyamique et en chauffant de plus ladite solution pour former un polyimidesiloxane.

15. Procédé selon la revendication 12, dans lequel le point d'ébullition dudit solvant est de 130 à 210°C.

16. Procédé selon la revendication 12, dans lequel ladite solution représente 10 à 30 % en poids de solides.

17. Procédé pour lier ensemble deux surfaces consistant à placer la bande adhésive selon l'une des revendications 1 à 11 entre deux surfaces et à presser deux desdites surfaces ensemble à une température de 200 à 350°C à une pression de 69 kPa à 1,4 MPa (10 à 200 psi) pendant 1 à 30 secondes.

18. Procédé selon la revendication 17, dans lequel lesdites surfaces sont un cadre conducteur métallique et une puce à circuit intégré.

19. Procédé selon la revendication 12, incluant la dernière étape supplémentaire consistant à enrouler ladite bande.

20. Bande enroulée fabriquée selon le procédé de la revendication 19.
